# EUROPEAN PATENT SPECIFICATION

(11) **EP 1 178 921 B1**
(45) Date of publication and mention of the grant of the patent: **28.04.2004**
(21) Application number: 00935460.6
(22) Date of filing: 16.05.2000
(51) Int. Cl.: B62L 3/02, B62K 23/02

(54) **SAFETY DEVICE FOR RACING BICYCLES PROVIDED WITH BRAKING OPERATING AERODYNAMIC SWINGING HANDLES**
SICHERHEITSVORRICHTUNG FÜR RENNFAHRRÄDER VERSEHEN MIT AERODYNAMISCHEN, SCHWINGENDEN BETÄTIGUNGSHEBELN
DISPOSITIF DE SURETE POUR VELO DE COURSE AVEC POIGNEES DE FREINAGE PIVOTANTES AERODYNAMIQUES

(30) Priority: 17.05.1999 IT MI991076
(43) Date of publication of application: 13.02.2002
(73) Proprietor: Pacific Electronic Instruments S.A., 47891 Dogana (SM)
(72) Inventor: PONSELE', Michèle, I-61100 Pesaro (IT); CORSI, Dario, I-61100 Pesaro (IT); AGABITI, Gabriele, I-61100 Pesaro (IT)
(74) Representative: Cicogna, Franco
(86) International application number: PCT/IT2000/000190
(87) International publication number: WO 2000/069712

(56) References cited:
- GB-A- 778 809
- US-A- 3 760 648
- US-A- 5 493 933

## Description

### BACKGROUND OF THE INVENTION

The present invention relates to an improved safety device applied to the handlebars of racing bicycles.

The device is specifically designed for allowing the racing competition cyclists to assume a frontward projecting positions, in which the cyclist forearms are abutted on the central portion of the handlebar while the cyclist hands grip a handle rigid with the brake lever.

The mentioned handle can partially swing about a pivot pin, housed in the support of the brake lever and of the speed change gear.

At present, the cyclists participating to collective racing competitions, in order to assume an effectively aerodynamic position, abut their forearms on a central top portion of the handlebar, and grip by their hands the sheath portions of the change gear cables, which portions are arranged at a frontward projecting position and extend from the brake bodies.

This, position, on the other hand, is a very dangerous one, since the directional handling of the bicycle is very poor, because of the excessive flexibility of the sheath portions.

To overcome the above mentioned problem, fixed lugs have been designed for application to the handlebar of the racing bicycles, including closely spaced handles, allowing the cyclist to assume a frontward projecting position, and, accordingly, much more aerodynamic.

The mentioned handles can be adjusted to allow the cyclist to find a suitable position depending on his body and his racing characteristics.

However, prior fixed handles or lugs are affected by the great drawback of dangerously delaying the braking operation, emergency cases, since the cyclist must necessarily remove his hands from the handles fixed to the brake levers.

Thus, as the cyclists are racing in very closed positions to one another, the reaction time would prevent a timely braking to be effectively performed.

Because of the above mentioned reasons, the above fixed handles on the bicycle handlebar have been prohibited by the Sports Organizations, with the exception of the chronometer racings, in which the cyclist is individually engaged in his racing.

### SUMMARY OF THE INVENTION

Accordingly, the aim of the present invention is to allow lugs or aerodynamic handles to be used even in collective racings, without any dangerous braking delays, as required for gripping by the hands the brake body and levers.

The invention is defined by claim 1 the preamble of which is based on the closest prior art according to US-A-3 760 648.

Actually, the brake levers can usually operate also the change gear assembly, but the safety handles according to the invention do not interfere against the change gear drives.

Said handles, moreover, allow to operate the brake by providing a downward directing pushing force on the handles.

Thus, the cyclist can assume an aerodynamic position, while properly controlling the direction of the bicycle, and this also in a braking situation.

The mentioned handles are rigid with the brake levers and, in a braking event, they are designed for swinging about a pivot pin applied to the support of the brake levers and change gear.

### BRIEF DESCRIPTION OF THE DRAWINGS

The above mentioned and other characteristics, of functional and constructional nature, of the improved device according to the present invention will become more apparent hereinafter from the figures of the accompanying drawings, illustrating, by way of an exemplary, but not limitative, example, the inventive device, in which:

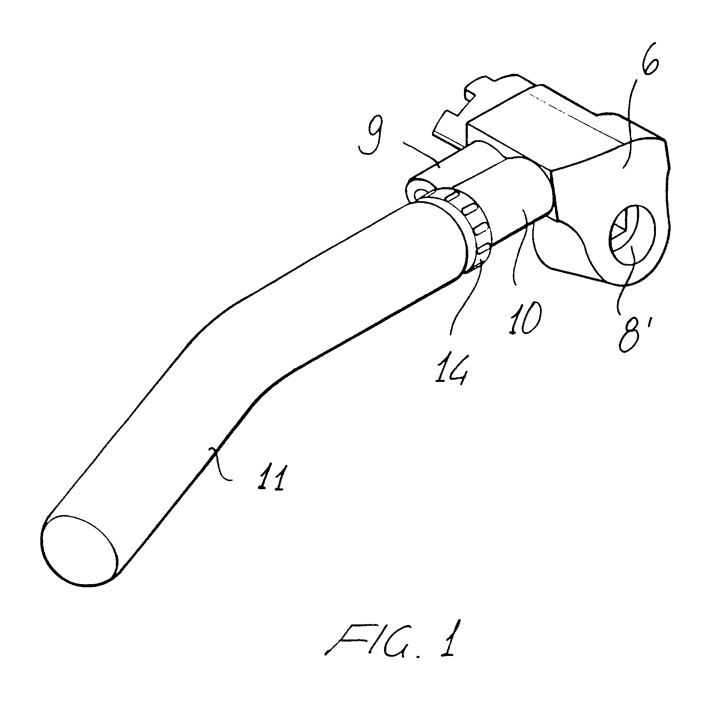

Figure 1 is a detail view illustrating the left braking handle;

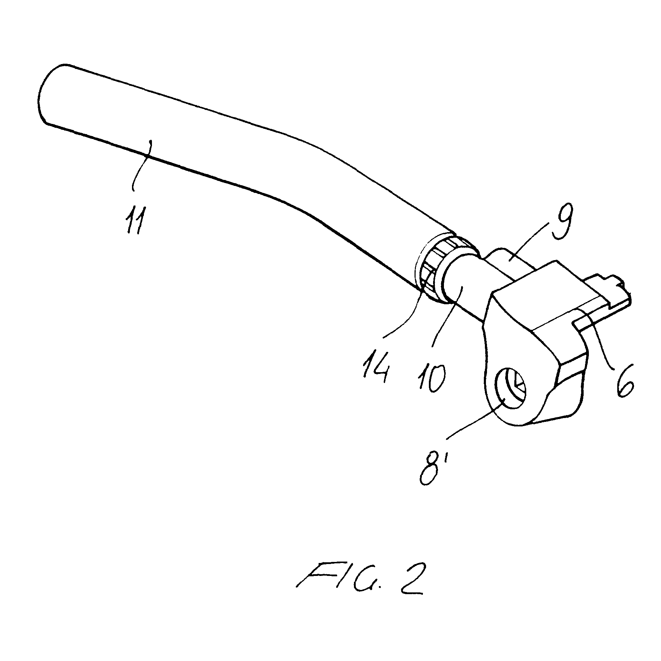

Figure 2 is a further detail view illustrating the left braking handle, as seen from a different angle;

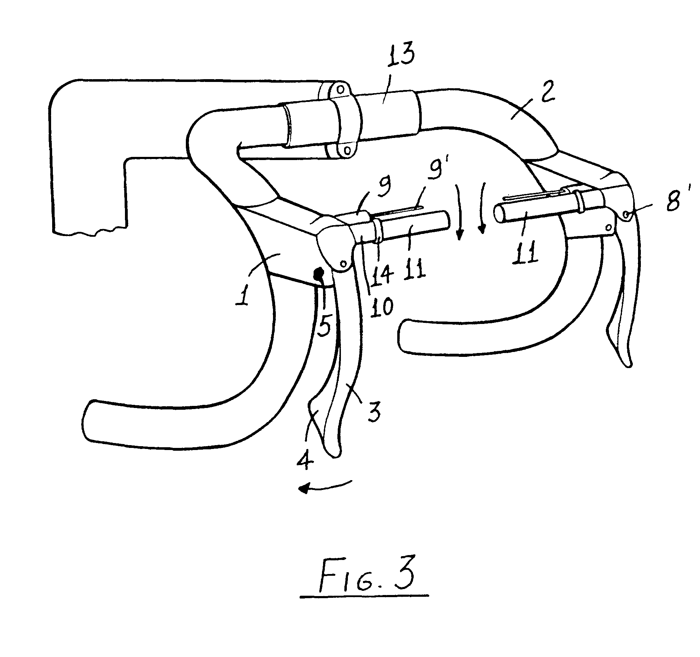

Figure 3 is a perspective view illustrating a bicycle handlebar and the braking handles applied to said handlebar;

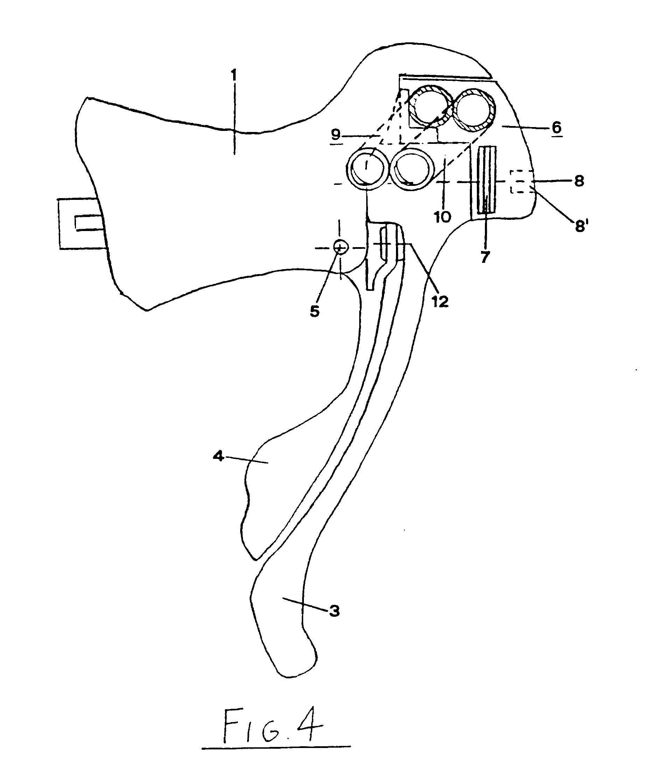

Figure 4 is a side view illustrating the device according to the invention, with the braking handle applied thereto and as partially cross-sectioned;

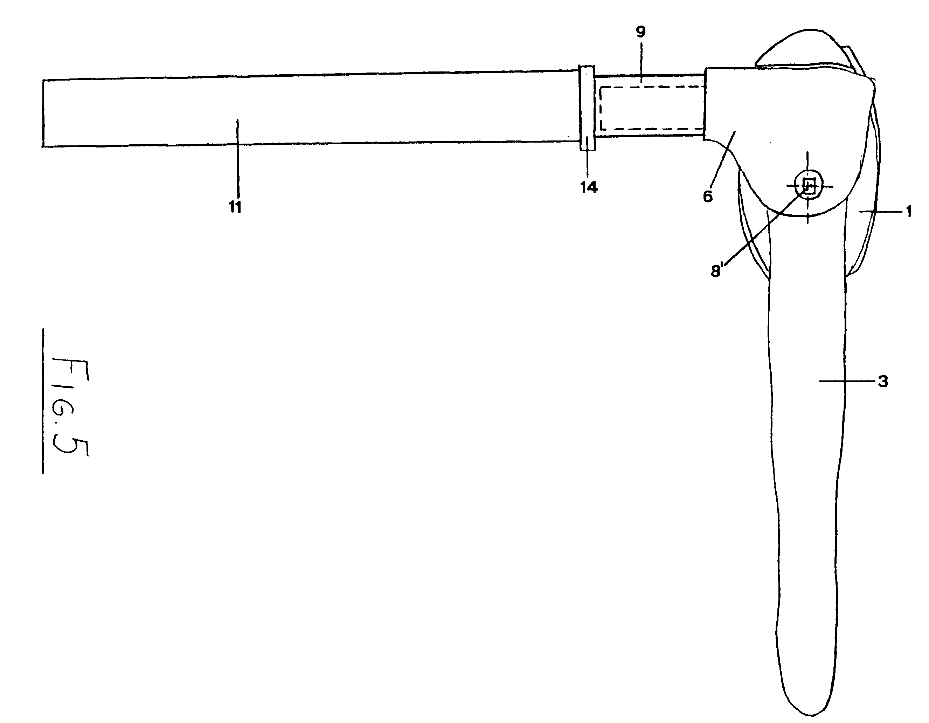

Figure 5 illustrated a braking lug, as seen from the front thereof;

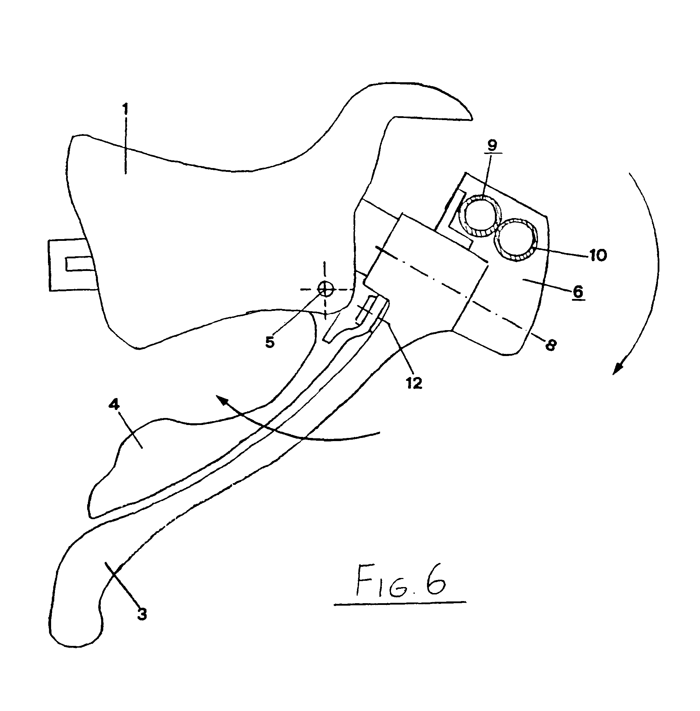

Figure 6 is a side view of the handle, and clearly shows the downward displacement both of the brake-change gear lever and of the handle, shown in cross-section, for performing the braking operation; and

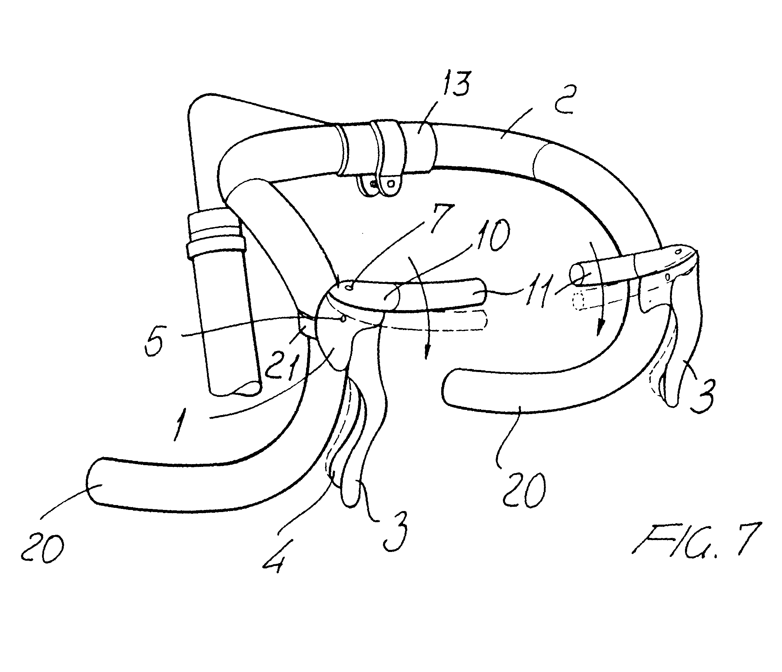

Figure 7 is a front perspective view illustrating the handlebar of a sports bicycle, to which the device according to the present invention has been applied.

### DESCRIPTION OF THE PREFERRED EMBODIMENT

With reference to the number references of the accompanying drawing figures, the device according to the present invention comprises a support element 1 for supporting the brake and change gear levers, respectively indicated by the reference numbers 3 and 4.

The support element 1 for supporting the brake levers 3 and the change gear levers 4 is provided with a pivot pin 5, thereabout the handle 11 can partially swing or turn, said handle 11 being operated by the cyclist in assuming, during the racing, a more aerodynamic position, and as the cyclist must perform a braking operation.

Said handles 11 are connected by screws or other clamping elements to the support element 1 supporting the brake levers 3 and change gear levers 4 and being rigid or connected to the brake lever 3.

Thus, the cyclist while holding his hands on the handle 11, can perform a required braking operation, by causing said handles 11 to partially turn or swing.

Actually, since the handles 11 are rigid with or coupled to the brake levers 3, as they are downward pushed, they will cause the racing bicycle to be braked, while allowing the cyclist to hold his hands on the handles 11, to allow in turn the bicycle to be driven and steered, even in an emergency condition.

The reference number 6 indicates the front portion of the brake-change gear system, including a spring 7, provided for operating the change gear, being driven by the lever 4.

The change gear lever 4 is rotatively supported on the axle 8.

More specifically, the front portion of the brake-change gear system is connected to the rotary axle 8 by a screw, passing through the hole 8 or fixedly engaged in the rear portion, or by other known means.

The reference number 9 indicates the outlet duct of the change gear sheath portions, and the reference number 9' indicates the change gear cable.

The reference number 10 indicates the starting cylindric portion of the handle, which is rigid with the front portion of the brake-change gear system.

Thus, as the handle 11 is downward pushed, said handle is caused to partially turn or swing about the pivot pin 5 of the brake, thereby operating the corresponding brake assembly.

On the other hand, the levers on the change gear axles 8 and 12 are not affected, and, accordingly, the change gear will continue to operate in an independent manner.

In the aerodynamic position assumed owing to the subject handles, a portion of the cyclist weight will be discharged on the cyclist forearms, abutted on the central top portion 13 of the handlebar 2.

Under such a condition, no braking operation is performed, which, on the contrary, will be carried out by displacing downward the cyclist wrist portions.

In this connection it should be pointed out that the aerodynamic handle according to the present invention can be adjusted by a counter-nut 14 or by any other suitable adjusting means, in order to arrange said handles in a desired position.

The attachment means can be variously designed, depending on the type of the used levers.

In a case of a lever provided for performing exclusively a braking operation, the handles 11 can be fixed to said lever 3.

Said levers, moreover, could include therein the lugs 10 and the handles 11.

The above disclosed handle 11 is arranged at a frontward displaced position from the pivot pin 5, thereby, in order to carry out a braking operation, said handle 11 must be downward pushed.

In this connection it should moreover be pointed out that the support of the brake-change gear levers is applied at the curved front portion of the racing bicycle handlebar.

Actually, the handles 11 inward project with respect to the main arms of the handlebar, at the front portion of the latter, thereby allowing the cyclist to hold a lowered aerodynamic position.

The above disclosed device is designed for application to the arms 20 of the bicycle handlebar by the clamping band 21.

While the safety device according to the present invention has been disclosed and illustrated by way of a merely exemplary embodiment, it should be apparent that the disclosed embodiment is susceptible to several modifications and variations all of which will come within the scope of the invention.

## Claims

1. A safety device mounted on a racing bicycle handlebar (2), said safety device comprising a left support element (1) and a right support element (1) each said support elements (1) swingably supporting a handle element (11), said handle elements being arranged in front of said handlebar (2) to be swingably brought from a first position firmly gripped by a hand of a cyclist during a racing to a second position for individually operating a respective brake lever (3) made rigid with the respective handle element (11), **characterized in that** each said support element further pivotally supports a said brake lever (3) and a change gear lever (4).

2. A safety device, according to Claim 1, **characterized in that** each said support element (1) is applied to the front portion of the two curved arms of the racing bicycle handlebar and that said handle elements (11) comprise separated rod elements (11) directed toward the inner portion of said handlebar, transversely of a bicycle longitudinal axis.

3. A safety device, according to Claim 1, **characterized in that** each said support element (1) is applied to a curved arm of the racing bicycle handlebar, by a clamping band.

4. A safety device, according to one or more of the preceding claims, **characterized in that** each said handle element (11) is applied at the front portion of said support element (1).

5. A safety device, according to one or more of the preceding claims, **characterized in that** said device comprises moreover adjusting elements and two separated handle elements (1) applied transversely of the front portion of the brake-change gear bodies, at such a position not interfering against the change gear lever (4), and allowing the operation of exclusively the brakes, by a partial swinging of said levers about a pivot pin (5).

6. A safety device, according to one or more of the preceding claims, **characterized in that** said handle element (11) has a configuration corresponding to that of the front portion (4) of the brake-change gear system and connected to an axle (8).

7. A safety device, according to one or more of the preceding claims, **characterized in that** the change gear cable outlet (6) is either separated or not from the handle element (11).

8. A safety device, according to one or more of the preceding claims, **characterized in that** each said handle element (11) is connected to the front portion of the brake-change gear body.

9. A safety device, according to one or more of the preceding claims, **characterized in that** each said handle element (11) can be adjusted by a counter-nut (14).

10. A safety device, according to one or more of the preceding claims, **characterized in that** said brake levers (3) include lugs (10) for coupling said handle elements (11).

11. A safety device, according to one or more of the preceding claims, **characterized in that** each said handle element (11) is arranged behind said pivot pin (5).

## Patentansprüche

1. Sicherheitsvorrichtung, die an der Lenkstange (2) eines Rennfahrrades angebracht ist und ein linksseitiges Stützelement (1) und ein rechtsseitiges Stützelement (1) umfasst, wobei jedes dieser Stützelemente (1) schwenkbar ein Griffelement (11) stützt, und wobei diese Griffelemente so vor der Lenkstange (2) angeordnet sind, dass sie schwenkbar von einer ersten Stellung, in der sie von einer Hand eines Radfahrers während eines Rennens fest erfasst werden, in eine zweite Stellung gebracht werden können, um individuell einen jeweiligen Bremshebel (3) zu betätigen, der starr mit dem jeweiligen Griffelement (11) ausgebildet ist,
**dadurch gekennzeichnet, dass**
jedes dieser Stützelemente des Weiteren schwenkbar einen der Bremshebel (3) und einen Gangschaltungshebel (4) stützt.

2. Sicherheitsvorrichtung nach Anspruch 1, **dadurch gekennzeichnet, dass** jedes der Stützelemente (1) am vorderen Abschnitt der beiden gekrümmten Arme der Rennfahrradlenkstange angebracht ist und dass die Griffelemente (11) separate Stangenelemente (11) umfassen, die zum inneren Abschnitt der Lenkstange hin, und zwar quer zur Fahrradlängsachse, ausgerichtet sind.

3. Sicherheitsvorrichtung nach Anspruch 1, **dadurch gekennzeichnet, dass** jedes der Stützelemente (1) mit Hilfe eines Klemmbandes an einem gekrümmten Arm der Rennfahrradlenkstange angebracht ist.

4. Sicherheitsvorrichtung nach einem oder mehreren der vorangehenden Ansprüche, **dadurch gekennzeichnet, dass** jedes der Griffelemente (11) am vorderen Abschnitt des Stützelementes (1) angebracht ist.

5. Sicherheitsvorrichtung nach einem oder mehreren der vorangehenden Ansprüche, **dadurch gekennzeichnet, dass** diese Vorrichtung des weiteren Einstellelemente und zwei getrennte Griffelemente (1) umfasst, die quer zum vorderen Abschnitt der Bremsen-Gangschaltungs-Grundkörper in einer Position angebracht sind, welche nicht den Gangschaltungshebel (4) stört und welche die Bedienung ausschließlich der Bremsen durch ein teilweises Schwenken der Hebel um den Schwenkzapfen (5) gestattet.

6. Sicherheitsvorrichtung nach einem oder mehreren der vorangehenden Ansprüche, **dadurch gekennzeichnet, dass** das Griffelement (11) eine Konfiguration aufweist, die der Konfiguration des vorderen Abschnitts (4) des Bremsen-Gangschaltungs-Systems entspricht und mit einer Achse (8) verbunden ist.

7. Sicherheitsvorrichtung nach einem oder mehreren der vorangehenden Ansprüche, **dadurch gekennzeichnet, dass** der Ausgang (6) des Gangschaltungsbowdenzuges vom Griffelement (11) getrennt oder mit dem Griffelement (11) verbunden sein kann.

8. Sicherheitsvorrichtung nach einem oder mehreren der vorangehenden Ansprüche, **dadurch gekennzeichnet, dass** jedes der Griffelemente (11) mit dem vorderen Abschnitt des Bremsen-Gangschaltungs-Grundkörpers verbunden ist.

9. Sicherheitsvorrichtung nach einem oder mehreren der vorangehenden Ansprüche, **dadurch gekennzeichnet, dass** jedes der Griffelemente (11) durch eine Kontermutter (14) eingestellt werden kann.

10. Sicherheitsvorrichtung nach einem oder mehreren der vorangehenden Ansprüche, **dadurch gekennzeichnet, dass** die Bremshebel (3) Ansätze (10) enthalten, mit denen die Griffelemente (11) angekoppelt werden können.

11. Sicherheitsvorrichtung nach einem oder mehreren der vorangehenden Ansprüche, **dadurch gekennzeichnet, dass** jedes der Griffelemente (11) hinter dem Schwenkzapfen (5) angeordnet ist.

## Revendications

1. Dispositif de sécurité monté sur une barre de maintien (2) d'un vélo de course, ledit dispositif de sécurité comprenant un élément de support à gauche (1) et un élément de support à droite (1), chacun desdits éléments de support (1) supportant de manière basculante une poignée (11), lesdites poignées étant disposées à l'avant de ladite barre de maintien (2) pour être déplacées de manière basculante à partir d'une première position fermement maintenue par une main d'un cycliste lors d'une course vers une seconde position pour actionner individuellement un levier de freinage (3) respectif, rigide avec la poignée (11) respective, **caractérisé en ce que** chacun desdits éléments de support supporte en outre de manière pivotante ledit levier de freinage (3) et un levier de changement de vitesse (4).

2. Dispositif de sécurité, selon la revendication 1, **caractérisé en ce que** chaque élément de support (1) est appliqué au niveau de la partie avant des deux bras courbés de la barre de maintien du vélo de course et **en ce que** lesdites poignées (11) comprennent des barres séparées (11) dirigées vers la partie interne de ladite barre de maintien, transversalement par rapport à un axe longitudinal du vélo.

3. Dispositif de sécurité, selon la revendication 1, **caractérisé en ce que** chacun desdits éléments de support (1) est appliqué au niveau d'un bras courbé de la barre de maintien du vélo, par une attache de blocage.

4. Dispositif de sécurité, selon l'une quelconque des revendications précédentes, **caractérisé en ce que** chaque poignée (11) est appliquée au niveau de la partie avant dudit élément de support (1).

5. Dispositif de sécurité, selon l'une quelconque des revendications précédentes, **caractérisé en ce que** ledit dispositif comprend de plus des éléments de réglage et deux poignées séparées (1) appliqués transversalement par rapport à la partie avant des corps de changement de vitesse - de freinage, dans une telle position qu'ils ne gênent pas le levier de changement de vitesse (4), et permettent le fonctionnement exclusif des freins, par un basculement partiel desdits leviers autour d'un pivot (5).

6. Dispositif de sécurité, selon l'une quelconque des revendications précédentes, **caractérisé en ce que** ladite poignée (11) possède une configuration correspondant à celle de la partie avant (4) du système de changement de vitesse - de freinage et est connectée à un axe (8).

7. Dispositif de sécurité, selon l'une quelconque des revendications précédentes, **caractérisé en ce que** la sortie (6) du câble de changement de vitesse est aussi bien séparée que non séparée de la poignée (11).

8. Dispositif de sécurité, selon l'une quelconque des revendications précédentes, **caractérisé en ce que** chacune desdites poignées (11) est connectée au niveau de la partie avant du corps de changement de vitesse - de freinage.

9. Dispositif de sécurité, selon l'une quelconque des revendications précédentes, **caractérisé en ce que** chacune desdites poignées (11) peut être réglée par un contre-écrou (14).

10. Dispositif de sécurité, selon l'une quelconque des revendications précédentes, **caractérisé en ce que** lesdits leviers de freinage (3) comprennent des raccords (10) pour coupler lesdites poignées (11).

11. Dispositif de sécurité, selon l'une quelconque des revendications précédentes, **caractérisé en ce que** chacune desdites poignées (11) est disposée derrière ledit pivot (5).
